# EUROPEAN PATENT APPLICATION

(11) **EP 4 765 871 A1**
(43) Date of publication of application: **24.06.2026**
(21) Application number: 24871706.8
(22) Date of filing: 29.08.2024
(51) Int. Cl.: H04R 3/00, G10L 17/00, G10L 21/0272, G10L 21/0364, H04R 1/00

(54) **BIDIRECTIONAL COMMUNICATION METHOD, PROGRAM, AND WEARABLE TERMINAL**

(30) Priority: 29.09.2023 JP 2023169463
(71) Applicant: Fairy Devices Inc., Bunkyo-ku, Tokyo 113-0034 (JP); Daikin Industries, Ltd., Osaka-shi, Osaka 530-0001 (JP)
(72) Inventor: FUJINO, Masato, Tokyo 113-0034 (JP)
(74) Representative: Goddar, Heinz J.
(86) International application number: PCT/JP2024/030947
(87) International publication number: WO 2025/069905

(57) **Abstract**

In a bidirectional communication among multiple wearable devices, a desired audio picked up by one of the wearable devices is transmitted to another wearable device. In a method according to an embodiment of the present disclosure for bidirectionally communicating sounds between a first wearable device and a second wearable device, the first wearable device including a first microphone, a first storage, and a first speaker, the second wearable device including a second microphone, a second storage, and a second speaker, and the first wearable device being configured to capture, using the first microphone a sound that is output from the second speaker or a sound arriving from a direction of a head of a wearer of the second wearable device, the method includes: a step of recording, by the first wearable device, in the first storage a sound arriving from a direction of a head of a wearer of the first wearable device at a higher level than sounds arriving from other directions; and a step of transmitting, by the first wearable device, audio data of the recorded sound to the second wearable device.

## Description

### TECHNICAL FIELD

The present disclosure relates to a bidirectional communication method, a program, and a wearable device.

### BACKGROUND ART

Techniques enabling bidirectional audio communication among a plurality of wearable devices (e.g., for web conferencing) have been proposed. For example, Patent Document 1 describes a neck-mounted device including a microphone that performs wireless communication with a server device or another neck-mounted device through a cloud system.

### RELATED ART DOCUMENTS

### PATENT DOCUMENT

Patent Document 1: Japanese Patent No. 6786139

### SUMMARY OF THE INVENTION

### PROBLEMS TO BE SOLVED BY THE INVENTION

However, in a case where bidirectional communication is performed among a plurality of wearable devices (for example, where multiple wearable devices including two wearable devices (wearable device A and wearable device B) are located at a short distance from each other, such as within the same conference room), the following problems occur.

### <Howling>

Audio data of a voice of the wearer of wearable device A is transmitted via communication to wearable device B and reproduced with a delay by the audio speaker of wearable device B. The reproduced sound is subsequently captured by the microphone of wearable device A, transmitted again to wearable device B, and reproduced with a delay. Such processing is repeated, forming an acoustic feedback loop and causing howling.

### <Degradation of Sound Quality>

The voice uttered by the wearer of wearable device B is not only picked up by the microphone of wearable device B, but also picked up by the microphone of wearable device A with a delay corresponding to a physical distance between wearable devices A and B. This delay causes reverberation and echo, and degradation of sound quality occurs.

As described above, there are challenges with one wearable device capturing sounds and transmitting audio data of sounds reproduced by another wearable device and problems with one wearable device capturing the voice of the wearer of another wearable device and transmitting audio data of the voice.

An object of this disclosure is to transmit audio data of desired audio to another wearable device in bidirectional communication among a plurality of wearable devices.

### MEANS FOR SOLVING THE PROBLEMS

In a system for bidirectionally communicating sounds between a first wearable device and a second wearable device, the first wearable device including a first microphone, a first storage, and a first speaker, the second wearable device including a second microphone, a second storage, and a second speaker, and the first wearable device being configured to capture, using the first microphone, a sound that is output from the second speaker or a sound arriving from a direction of a head of a wearer of the second wearable device, a method includes a step of recording, by the first wearable device, in the first storage a sound arriving from a direction of a head of a wearer of the first wearable device at a higher level than sounds arriving from other directions, and a step of transmitting, by the first wearable device, audio data of the recorded sound to the second wearable device.

According to the first aspect of the present disclosure, audio data of desired audio can be transmitted to another wearable device.

A second aspect of the present disclosure is the method described in the first aspect, and the method further includes a step of, by the first wearable device, either not transmitting the audio data of the recorded sound to the second wearable device or transmitting the audio data of the recorded sound as silent data to the second wearable device, when the first wearable device detects no sound arriving from the direction of the head of the wearer of the first wearable device.

According to the second aspect of the present disclosure, audio data of the voice of a wearer of a wearable device can be transmitted to another wearable device.

A third aspect of the present disclosure is the method described in the first aspect or the second aspect, and the method further includes a step of, by the first wearable device, either not transmitting the audio data of the recorded sound to the second wearable device or transmitting the audio data of the recorded sound as silent data to the second wearable device, when the first wearable device detects no sound at a level exceeding a predetermined threshold arriving from the direction of the head of the wearer of the first wearable device.

According to the third aspect of the present disclosure, audio data of the wearer's voice, when detected at a level exceeding a predetermined threshold, may be transmitted to another wearable device.

A fourth aspect of the present disclosure is the method described in any aspect of the first to third aspects, and the method further includes a step of, by the first wearable device, either not transmitting the audio data of the recorded sound to the second wearable device or transmitting the audio data of the recorded sound as silent data to the second wearable device, when the first wearable device detects no human voice sound arriving from the direction of the head of the wearer of the first wearable device.

According to the fourth aspect of the present disclosure, audio data of a human voice can be transmitted to another wearable device.

A fifth aspect of the present disclosure is the method described in any of the first to fourth aspects, and the method further includes a step of, by the first wearable device, either not transmitting the audio data of the recorded sound to the second wearable device or transmitting the audio data of the recorded sound as silent data to the second wearable device, when the first wearable device detects no sound of a voice having a predetermined voiceprint arriving from the direction of the head of the wearer of the first wearable device.

According to the fifth aspect of the present disclosure, audio data voice of a predetermined person can be transmitted to another wearable device.

In a system for bidirectionally communicating sounds between a first wearable device and a second wearable device, the first wearable device including a first microphone, a first storage, and a first speaker, the second wearable device including a second microphone, a second storage, and a second speaker, and the first wearable device being configured to capture, using the first microphone, a sound that is output from the second speaker or a sound arriving from a direction of a head of a wearer of the second wearable device, a program according to a sixth aspect of the present disclosure causes the first wearable device to execute procedures of recording in the first storage a sound arriving from a direction of a head of a wearer of the first wearable device at a higher level than sounds arriving from other directions, and transmitting audio data of the recorded sound to the second wearable device.

A first wearable device according to a seventh aspect of the present disclosure, in a system for bidirectionally communicating sounds between the first wearable device and a second wearable device, includes a first microphone, a first storage, and a first speaker, and the second wearable device includes a second microphone, a second storage, and a second speaker. The first wearable device being configured to: capture, using the first microphone, a sound that is output from the second speaker or a sound arriving from a direction of a head of a wearer of the second wearable device; record a sound arriving from a direction of a head of a wearer of the first wearable device in the first storage at a higher level than sounds arriving from other directions; and transmit audio data of the recorded sound to the second wearable device.

### BRIEF DESCRIPTION OF THE DRAWINGS

[FIG. 1] FIG. 1 is a diagram illustrating an overall configuration according to an embodiment of the present disclosure.
[FIG. 2] FIG. 2 is a diagram illustrating an example of a wearable device according to the embodiment of the present disclosure.
[FIG. 3] FIG. 3 is a diagram for explaining directivity of a microphone of the wearable device according to the embodiment of the present disclosure.
[FIG. 4] FIG. 4 is a diagram illustrating a hardware configuration of the wearable device according to the embodiment of the present disclosure.
[FIG. 5] FIG. 5 is a diagram illustrating a hardware configuration of a bidirectional communication management device according to the embodiment of the present disclosure.
[FIG. 6] FIG. 6 is a functional block diagram of a controller of the wearable device according to the embodiment of the present disclosure.
[FIG. 7] FIG. 7 is a sequence diagram of a bidirectional communication process according to the embodiment of the present disclosure.

### DESCRIPTION OF EMBODIMENTS

Hereinafter, an embodiment of the present disclosure will be described with reference to the drawings.

### <Explanation of Terms>

In the present specification, "device" refers to a terminal apparatus configured to perform bidirectional audio communication with another device, such as in a web conferencing scenario. For example, the device may be a wearable apparatus having a microphone function, a personal computer including a built-in microphone, or a personal computer operatively connected to one or more external microphones.

### <Overall Configuration>

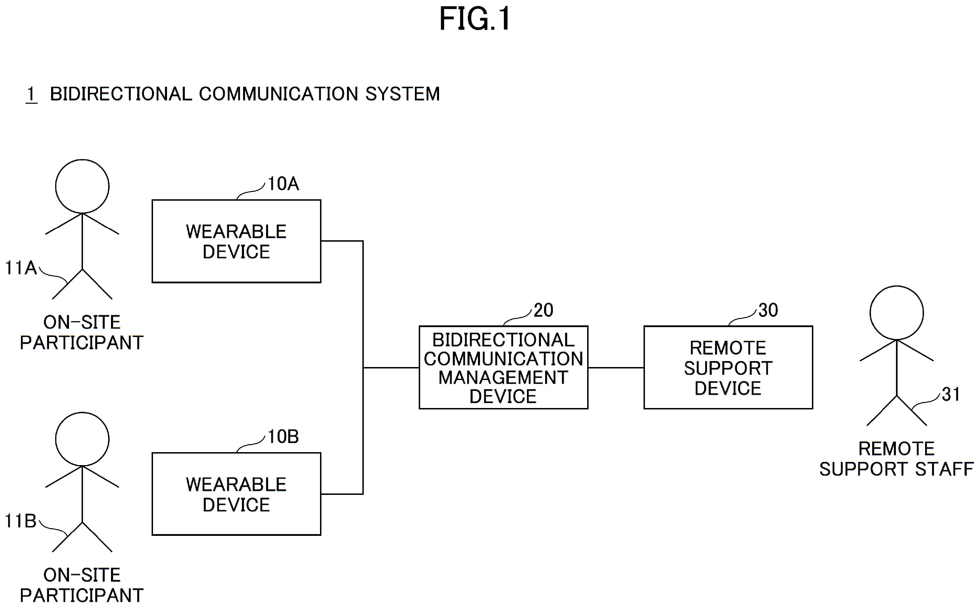

FIG. 1 is a diagram illustrating an overall configuration according to an embodiment of the present disclosure. A bidirectional communication system 1 includes wearable devices 10A and 10B (hereinafter sometimes collectively referred to as a "wearable device 10"), a bidirectional communication management device 20, and a remote support device 30. Although FIG. 1 describes a case where there are two wearable devices 10 and one remote support device 30, the number of devices is not limited to two. These devices will be described below.

### <<Wearable Device>>

The wearable device 10 is a device having a microphone function (hereinafter also referred to as a "microphone") used by an on-site participant. For example, the wearable device 10 is a neck-mounted device. The wearable device 10 can send and receive data to and from the bidirectional communication management device 20 via a discretionarily selected network.

Assume that an on-site participant 11A is a wearer of the wearable device 10A and an on-site participant 11B is a wearer of the wearable device 10B (hereinafter, the on-site participants 11A and 11B are sometimes collectively referred to as the "on-site participant 11"). Assume further that the on-site participants 11A and 11B are present in the same location (for example, the same room), such that sounds produced by a participant or reproduced by their own wearable device can be captured by the microphone of the other participant's wearable device.

### <<Bidirectional Communication Management Device>>

The bidirectional communication management device 20 is a device that manages bidirectional communication of at least sound among a plurality of devices (in the example of FIG. 1, the wearable devices 10A and 10B and the remote support device 30). The bidirectional communication management device 20 includes one or more computers.

### <<Remote Support Device>>

The remote support device 30 is a device used by remote support staff 31. For example, the remote support staff 31 is a person who supports work at a remote location away from the site where the on-site participant 11 is working. For example, the remote support device 30 is a personal computer. The remote support device 30 can send and receive data to and from the bidirectional communication management device 20 via a discretionarily selected network.

### <Configuration of Wearable Device>

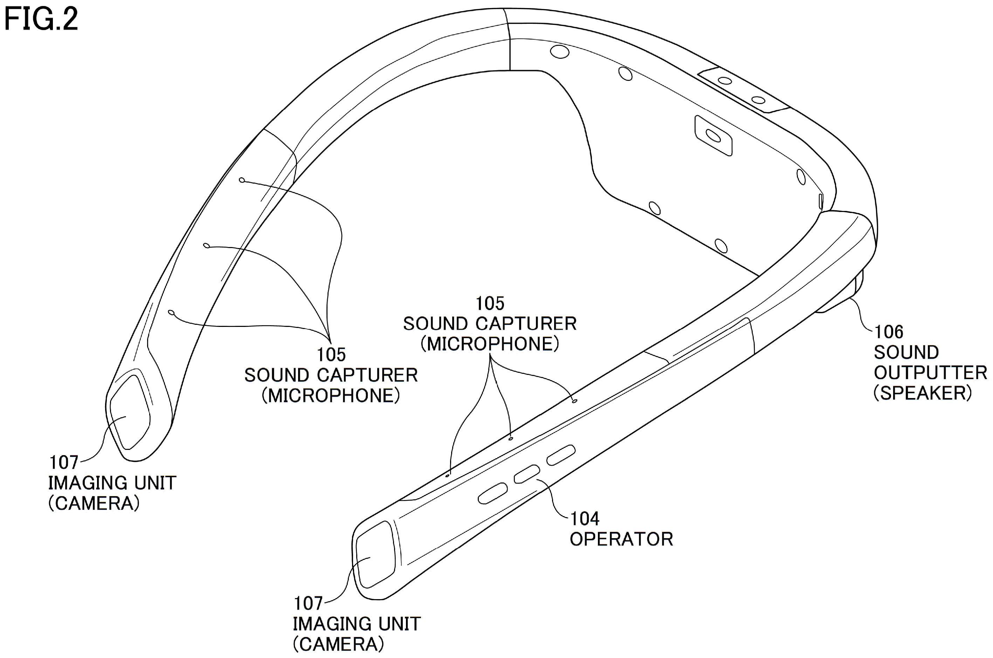

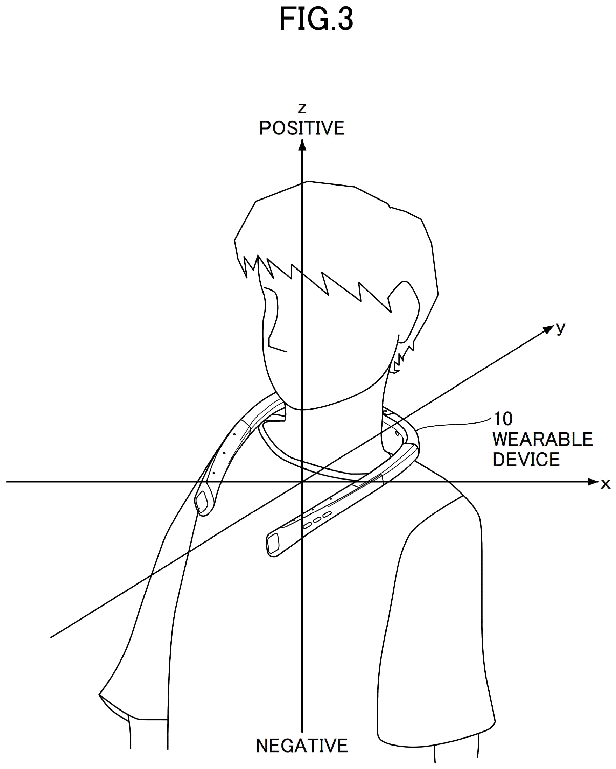

Hereinafter, the wearable device 10 will be described in detail with reference to FIGS. 2 and 3.

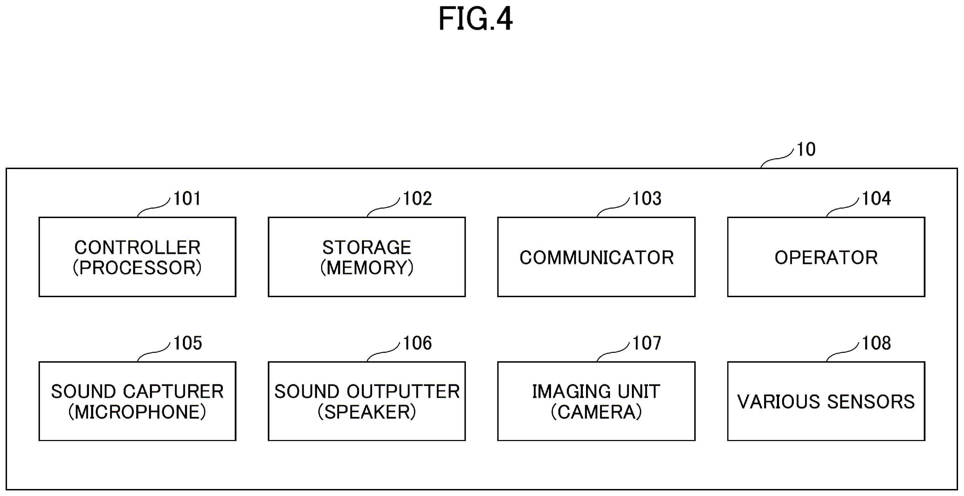

FIG. 2 is an example of the wearable device 10 according to the embodiment of the present disclosure. For example, the wearable device 10 is a device having a neck-mounted shape as illustrated in FIG. 2. For example, the wearable device 10 includes a sound capturer (microphone) 105 as illustrated in FIG. 2. The wearable device 10 may further include an operator 104, a sound outputter (speaker) 106, and an imaging unit (camera) 107 as illustrated in FIG. 2. Each of these components will be described later in detail with reference to FIG. 4.

### <<Directivity of Microphone Function>>

Hereinafter, the directivity of the microphone function of the wearable device 10 will be described. The microphone function of the wearable device 10 has directivity. For example, a plurality of omni-directional microphones (microphone array) may be used to realize directivity, or a directional microphone may be used. In the wearable device 10 illustrated in FIG. 2, a plurality of omni-directional microphones are used to realize directivity.

FIG. 3 is a diagram for explaining the directivity of the microphone of the wearable device according to the embodiment of the present disclosure.

An axis parallel to the midline of the wearer passing through the top of the head of the wearer is defined as the z-axis, the upper body side of the wearer is defined as positive, and the lower body side of the wearer is defined as negative. In other words, when the wearer tilts their body, the z-axis also tilts. The left-right direction of the wearer is defined as the x-axis, and the front-rear direction of the wearer is defined as the y-axis. The wearable device 10 preferentially records sounds arriving from the positive z-axis direction (i.e., the wearer's speaking direction) at a higher level than sounds arriving from other directions due to the directional sensitivity of the microphone

### <Hardware Configuration>

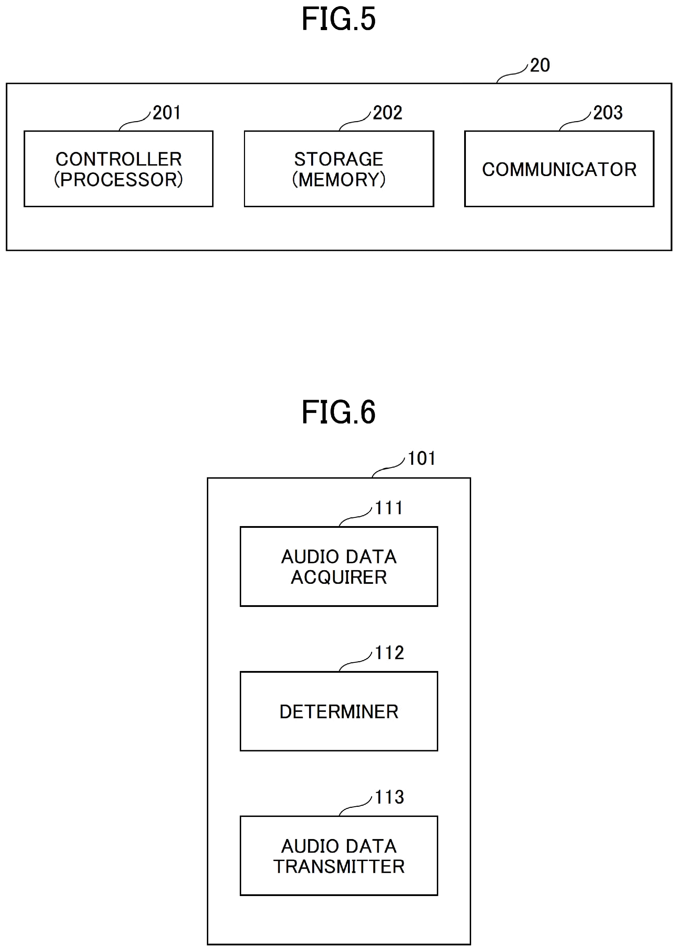

Hereinafter, an example of the hardware configuration of the wearable device 10 will be described with reference to FIG. 4, and an example of the hardware configuration of the bidirectional communication management device 20 will be described with reference to FIG. 5.

FIG. 4 is a diagram illustrating the hardware configuration of the wearable device 10 according to the embodiment of the present disclosure. The wearable device 10 may include a controller (processor) 101, a storage (memory) 102, a communicator 103, the operator 104, a sound capturer (microphone) 105, the sound outputter (speaker) 106, the imaging unit (camera) 107, and various sensors 108. Each of these components will be described below.

The controller (processor) 101 is a processor configured to control the wearable device 10. For example, the controller (processor) 101 may be a CPU (central processing unit), a GPU (graphics processing unit), or the like.

The storage (memory) 102 is a memory configured to store discretionarily selected data.

The communicator 103 is connected to a discretionarily selected network to communicate with another computer (such as the bidirectional communication management device 20).

The operator 104 is a button or the like for the on-site participant 11 to input instructions to the wearable device 10.

The sound capturer (microphone) 105 is configured to capture sounds. As described above, the sound capturer (microphone) 105 has directivity.

The sound outputter (speaker) 106 is configured to output sounds (for example, sounds captured by the other participant's device acquired via the bidirectional communication management device 20).

The imaging unit (camera) 107 is configured to capture still images and moving images.

The various sensors 108 are one or more discretionarily selected sensors such as an acceleration sensor and a GPS (global positioning system).

FIG. 5 is a diagram illustrating the hardware configuration of the bidirectional communication management device 20 according to the embodiment of the present disclosure. The remote support device 30 has the same hardware configuration. The bidirectional communication management device 20 may include a controller (processor) 201, a storage (memory) 202, and a communicator 203. Each of these components will be described below.

The controller (processor) 201 is a processor configured to control the bidirectional communication management device 20. For example, the controller (processor) 201 is a CPU (central processing unit), a GPU (graphics processing unit), or the like.

The storage (memory) 202 is a memory configured to store discretionarily selected data.

The communicator 203 is connected to a discretionarily selected network to communicate with another computer (the wearable device 10, the remote support device 30, etc.).

FIG. 6 is a functional block diagram of the controller 101 of the wearable device 10 according to the embodiment of the present disclosure. The controller 101 of the wearable device 10 includes an audio data acquirer 111, a determiner 112, and an audio data transmitter 113. The controller 101 of the wearable device 10 functions as the audio data acquirer 111, the determiner 112, and the audio data transmitter 113 by executing a program.

The audio data acquirer 111 is configured to record, in the storage, sounds arriving from the direction of the head of the wearer of the wearable device 10 at a higher level than sounds arriving from other directions, and to record sounds arriving from other directions at a lower level. For example, the audio data acquirer 111 may form a directional audio signal by processing multi-channel audio signals captured by a plurality of non-directional microphones to generate a single-channel audio signal.

In this way, it is possible to suppress adverse effects caused by capturing sounds that are output from the speaker of the other participant's wearable device or sounds arriving from the direction of the head of the other participant who wears their wearable device (i.e., the voice of the other participant).

The determiner 112 determines whether a sound recorded by the audio data acquirer 111 in the storage constitutes target audio or background noise. The description below is provided separately for (i) a case where the sound is determined to be target audio in all instances, and (ii) a case where the sound is selectively determined to be target audio or background noise.

### [Case where the sound is determined to be target audio in all instances]

The determiner 112 determines that a sound arriving from the direction of the head of the wearer of the wearable device 10 recorded by the audio data acquirer 111 in the storage is target audio in all instances.

### [Case where the sound is selectively determined to be target audio or background noise]

The determiner 112 determines whether a sound recorded by the audio data acquirer 111 in the storage is target audio or background noise. Hereinafter, a method of determining whether a recorded sound is target audio or background noise will be described. The determination may be performed based on a combination of two or more of [Directivity, Origin of Sound, and Level], [Directivity, Origin of Sound, and Human Voice], and [Directivity, Origin of Sound, and Predetermined Voiceprint].

### [Directivity and Origin of Sound]

For example, when the determiner 112 detects a sound arriving from the direction of the head of the wearer of the wearable device 10, the determiner 112 may determine that the sound recorded in the storage is target audio. The determiner 112 may estimate an origin of sound using any suitable method. In some cases, the sound may be defined as target audio only when the wearer is producing a voice. Conversely, when the determiner 112 does not detect a sound arriving from the direction of the head of the wearer of the wearable device 10, but instead detects a sound from another direction, the determiner 112 may determine that the recorded sound is background noise. Further, when the determiner 112 detects a sound arriving from the direction of the wearer's head and within a predetermined distance from the microphone, the determiner 112 may determine that the sound is target audio.

### [Directivity, Origin of Sound, and Level]

For example, when the determiner 112 detects a sound at a level exceeding a predetermined threshold arriving from the direction of the head of the wearer of the wearable device 10, the determiner 112 may determine that the sound recorded in the storage is target audio. In this case, it is possible to exclude small noises and determine that the voice that is being produced by the wearer is target audio. Conversely, when the determiner 112 does not detect a sound at a level exceeding a predetermined threshold arriving from the direction of the wearer's head, but instead detects a sound in another direction or a sound at a level not exceeding the predetermined threshold, the determiner 112 may determine that the recorded sound is background noise.

### [Directivity, Origin of Sound, and Human Voice]

For example, when the determiner 112 detects a human voice sound arriving from the direction of the head of the wearer of the wearable device 10, the determiner 112 may determine that the sound recorded in the storage is target audio. The determiner 112 may determine whether the voice is a human voice using the VAD (voice activity detection) method or the like. In this case, it is possible to exclude noises other than the human voice and use the voice that is being produced by the wearer as target audio. Conversely, when the determiner 112 does not detect a human voice sound arriving from the direction of the wearer's head, but instead detects a sound from another direction or a sound other than a human voice, the determiner 112 may determine that the recorded sound is background noise.

### [Directivity, Origin of Sound, and Predetermined Voiceprint]

For example, if the determiner 112 detects a sound of a voice having a predetermined voiceprint arriving from the direction of the head of the wearer of the wearable device 10, the determiner 112 may determine that the sound recorded in the storage is target audio. The determiner 112 may determine whether the voice has a predetermined voiceprint by using a trained model for determining whether the voice has a predetermined voiceprint, which is obtained by machine learning using a predetermined voiceprint (specifically, the voiceprint of the wearer of the wearable device 10) as training data. In this case, the voice of the wearer can be used as target audio by excluding voices of the other wearers and noises. Conversely, when the determiner 112 does not detect a sound of a voice having a predetermined voiceprint arriving from the direction of the wearer's head, but instead detects a sound in another direction or a sound having a voiceprint other than the predetermined voiceprint arriving from the direction of the wearer's head, the determiner 112 may determine that the recorded sound is background noise.

The audio data transmitter 113 transmits the audio data of the sound recorded in the storage to the bidirectional communication management device 20 (and thereafter the audio data is transmitted to the other wearable device via the bidirectional communication management device 20). Specifically, the audio data transmitter 113 transmits to the bidirectional communication management device 20 the audio data of the sound that has been determined to be target audio by the determiner 112.

When the sound recorded in the storage is determined to be background noise, the audio data transmitter 113 either does not transmit the audio data of the recorded sound to the bidirectional communication management device 20 or may transmit the audio data of the recorded sound as silence data to the bidirectional communication management device 20. Specifically, when no audio data is transmitted, no data is transmitted. When silence data is transmitted, data indicating silence, such as data consisting of consecutive zeros, is transmitted. Gaussian noise data may be transmitted instead of silence data.

### <Signal Processing>

Hereinafter, an example of signal processing will be described. A multi-channel audio signal corresponding to a sound captured by a plurality of microphones is divided into two parts. One part is processed to form a directional single-channel audio signal, and the other part is used to determine whether the captured sound is target audio or background noise.

When the captured sound is determined to be target audio, the directional single-channel audio signal is used without modification. A web conferencing application executed by the wearable device 10 may acquire the directional single-channel audio signal and transmit the acquired audio signal to the bidirectional communication management device 20.

When the captured sound is determined to be background noise, zero data may be used instead of the directional single-channel audio signal. For example, no data may be transmitted, or data consisting of consecutive zeros having a predetermined data length may be transmitted as silent data. The web conferencing application executed by the wearable device 10 may acquire the silent data and transmit the silent data to the bidirectional communication management device 20.

### <Others>

In the embodiment of the present disclosure, directivity may be formed only when the sound is determined to be target audio.

The function of the wearable device 10 according to the present disclosure, namely, recording a sound arriving from the direction of the wearer's head at a higher level than sounds arriving from other directions in the storage, and transmitting audio data of the recorded sound to other wearable devices, may be enabled by default, or may be enabled when participating in bidirectional communication, such as web conferencing.

### <Processing Method>

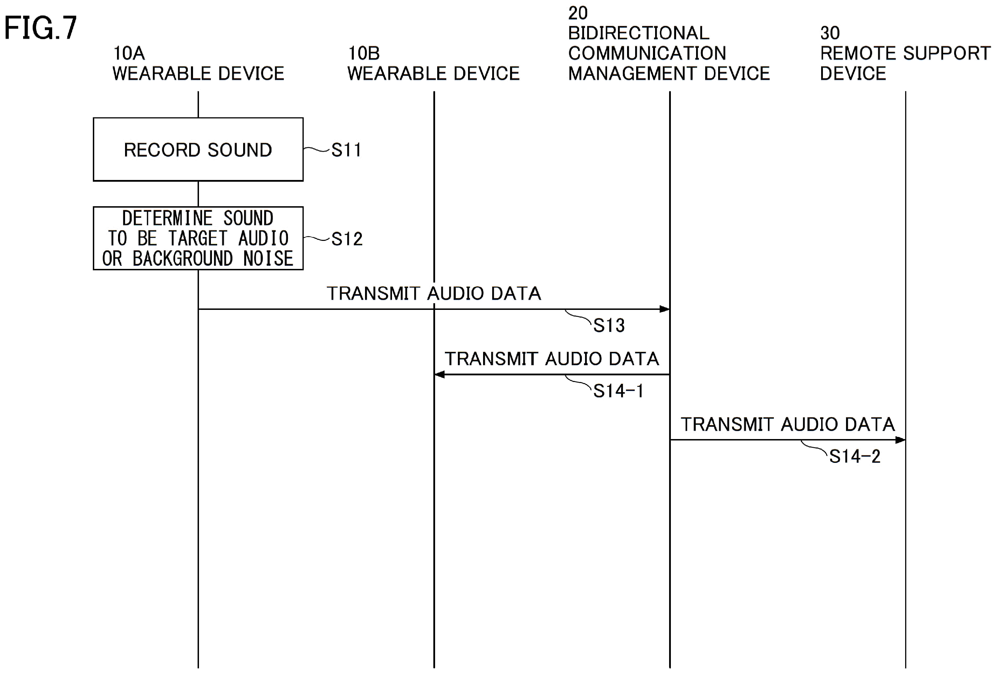

FIG. 7 is a sequence diagram of a process of bidirectional communication according to an embodiment of the present disclosure.

The microphone of the wearable device 10A has directivity. It is assumed that the microphone of the wearable device 10A captures sounds that are output from the speaker of the wearable device 10B or sounds arriving from the direction of the head of the wearer wearing the wearable device 10B. Herein, the wearable device 10A may determine whether a sound arrives from the speaker of the wearable device 10B or from the direction of the head of the wearer of the wearable device 10B, using a discretionarily selected method.

In step 11 (S11), the wearable device 10A records a sound arriving from the direction of the head of the person wearing the wearable device 10A in the storage at a higher level than sounds arriving from other directions.

In step 12 (S12), the wearable device 10A determines whether the sound recorded in the storage in S11 is target audio or background noise. Hereinafter, the description below is provided separately for (i) a case where the sound is determined to be target audio in all instances, and (ii) a case where the sound is selectively determined to be target audio or background noise.

### [Case where the sound is determined to be target audio in all instances]

The wearable device 10A determines that the sound arriving from the direction of the head of the wearer of the wearable device 10A recorded in the storage in S11 is target audio in all instances.

### [Case where the sound is selectively determined to be target audio or background noise]

The wearable device 10A determines whether the sound recorded in the storage in S11 is target audio or background noise.

In step 13 (S13), the wearable device 10A transmits audio data of the sound recorded in the storage to the bidirectional communication management device 20. Specifically, the wearable device 10A transmits audio data of the sound that has been determined to be target audio in S12 to the bidirectional communication management device 20.

When the wearable device 10A determines that the sound recorded in the storage is background noise, the wearable device 10A either does not transmit audio data of the recorded sound to the bidirectional communication management device 20 or may transmit audio data of the recorded sound as silent data to the bidirectional communication management device 20.

In step 14-1 (S14-1) and step 14-2 (S14-2), the bidirectional communication management device 20 transmits the audio data of the recorded sound acquired in S13 (i.e., the sound captured by the wearable device 10A) to the wearable device 10B and the remote support device 30.

When a stationary speaker device including a microphone is used instead of a wearable device, it may be difficult to determine in advance the direction from which target audio arrives. This is because, for example, the positional relationship between a participant at the site and the stationary device may change. In contrast, when a neck-mounted wearable device is used as in the present disclosure, the direction from which target audio arrives (e.g., the direction of the wearer's head) can be determined in advance. Accordingly, the neck-mounted wearable device is preferable as an embodiment.

Although the embodiments have been described above, it will be understood that various changes in form and details can be made without departing from the spirit and scope of the claims.

This international application claims the priority of Japanese Patent Application No. 2023-169463 filed on September 29, 2023, and the entire contents of Japanese Patent Application No. 2023-169463 are incorporated herein by reference.

### REFERENCE SIGNS LIST

- 1: Bidirectional communication system
- 10A: Wearable device
- 10B: Wearable device
- 11A: On-site participant
- 11B: On-site participant
- 20: Bidirectional communication management device
- 30: Remote support device
- 3: Remote support staff
- 101: Controller (processor)
- 102: Storage (memory)
- 103: Communicator
- 104: Operator
- 105: Sound capturer (microphone)
- 106: Sound outputter (speaker)
- 107: Imaging unit (camera)
- 108: Various sensors
- 111: Audio data acquirer
- 112: Determiner
- 113: Audio data transmitter
- 201: Controller (processor)
- 202: Storage (memory)
- 203: Communicator

## Claims

1. A method, in a system for bidirectionally communicating sounds between a first wearable device and a second wearable device, the first wearable device including a first microphone, a first storage, and a first speaker, the second wearable device including a second microphone, a second storage, and a second speaker, and the first wearable device being configured to capture, using the first microphone, a sound that is output from the second speaker or a sound arriving from a direction of a head of a wearer of the second wearable device, the method comprising:
a step of recording, by the first wearable device, in the first storage a sound arriving from a direction of a head of a wearer of the first wearable device at a higher level than sounds arriving from other directions; and
a step of transmitting, by the first wearable device, audio data of the recorded sound to the second wearable device.

2. The method according to claim 1, further comprising a step of:
by the first wearable device, either not transmitting the audio data of the recorded sound to the second wearable device or transmitting the audio data of the recorded sound as silent data to the second wearable device, when the first wearable device detects no sound arriving from the direction of the head of the wearer of the first wearable device.

3. The method according to claim 1 or 2, further comprising a step of:
by the first wearable device, either not transmitting the audio data of the recorded sound to the second wearable device or transmitting the audio data of the recorded sound as silent data to the second wearable device, when the first wearable device detects no sound at a level exceeding a predetermined threshold arriving from the direction of the head of the wearer of the first wearable device.

4. The method according to any one of claims 1 to 3, further comprising a step of:
by the first wearable device, either not transmitting the audio data of the recorded sound to the second wearable device or transmitting the audio data of the recorded sound as silent data to the second wearable device, when the first wearable device detects no human voice sound arriving from the direction of the head of the wearer of the first wearable device.

5. The method according to any one of claims 1 to 4, further comprising a step of:
by the first wearable device, either not transmitting the audio data of the recorded sound to the second wearable device or transmitting the audio data of the recorded sound as silent data to the second wearable device, when the first wearable device detects no sound of a voice having a predetermined voiceprint arriving from the direction of the head of the wearer of the first wearable device.

6. A program, in a system for bidirectionally communicating sounds between a first wearable device and a second wearable device, the first wearable device including a first microphone, a first storage, and a first speaker, the second wearable device including a second microphone, a second storage, and a second speaker, and the first wearable device being configured to capture, using the first microphone, a sound that is output from the second speaker or a sound arriving from a direction of a head of a wearer of the second wearable device, the program causing the first wearable device to execute procedures of:
recording in the first storage a sound arriving from a direction of a head of a wearer of the first wearable device at a higher level than sounds arriving from other directions; and
transmitting audio data of the recorded sound to the second wearable device.

7. A first wearable device, in a system for bidirectionally communicating sounds between the first wearable device and a second wearable device, the first wearable device including a first microphone, a first storage, and a first speaker, the second wearable device including a second microphone, a second storage, and a second speaker,
the first wearable device being configured to:
capture, using the first microphone, a sound that is output from the second speaker or a sound arriving from a direction of a head of a wearer of the second wearable device;
record a sound arriving from a direction of a head of a wearer of the first wearable device in the first storage at a higher level than sounds arriving from other directions; and
transmit audio data of the recorded sound to the second wearable device.
